# EUROPEAN PATENT APPLICATION

(11) **EP 4 693 209 A1**
(43) Date of publication of application: **11.02.2026**
(21) Application number: 24778957.1
(22) Date of filing: 27.02.2024
(51) Int. Cl.: G06T 19/00, G06F 3/01, G06F 3/04815

(54) **TRAINING CONTENT CREATION SYSTEM AND TRAINING CONTENT CREATION METHOD**

(30) Priority: 27.03.2023 JP 2023049949
(71) Applicant: Hitachi Systems, Ltd., Tokyo 141-8672 (JP)
(72) Inventor: FUJIWARA, Takayuki, Tokyo 100-8280 (JP); ROJAS FERRER, Cesar Daniel, Tokyo 100-8280 (JP); KATSUMATA, Daisuke, Tokyo 141-8672 (JP); KABATA, Ryoichi, Tokyo 141-8672 (JP); NARITA, Yoshihito, Tokyo 141-8672 (JP); KIKUCHI, Katsuro, Tokyo 141-8672 (JP)
(74) Representative: MERH-IP Matias Erny Reichl Hoffmann Patentanwälte PartG mbB
(86) International application number: PCT/JP2024/006986
(87) International publication number: WO 2024/202816

(57) **Abstract**

A training content creation system (1) displays, on a display, an object of a device arranged in a virtual space to create a training content for training work for the device. A collision detection program (163) identifies, based on an analysis result of a scenario, a second part that collides with a first part among a plurality of parts. A content creation program (161) registers, in a part arrangement file of the first part, the second part identified to collide with the first part.

## Description

### Technical Field

The present invention relates to a training content creation system and a training content creation method.

### Background Art

In recent years, training of maintenance work of an industrial product has been performed using training content in which each part constituting the industrial product is represented by a 3-dimensional computer graphics (3DCG) object and a disassembly and assembly process is represented by a 3DCG animation. A worker wears a head-mounted display and trains the maintenance work of the industrial product in a three-dimensional virtual space similarly to a real world while viewing the training content displayed on the display.

Wherein, the industrial product includes a large number of parts that collide with each other. When there is omission of consideration of collision of parts in the training content, the three-dimensional virtual space provided by the training content may be different from the real world, and a significance of the training may be impaired. For example, in the maintenance work of the industrial product, it is necessary to remove one part first with respect to the other part in the real world, but the one part is removed without removing the other part in the three-dimensional virtual space of the training content.

Wherein, with respect to the collision of the 3DCG object, PTL 1 discloses a technique for deforming one 3DCG object in consideration of a direction of a virtual camera when there is collision of the 3DCG object.

### Citation List

### Patent Literature

PTL 1: JP2018-072974A

### Summary of Invention

### Technical Problem

However, in the related art described above, a 3DCG object (for example, an unspecified 3DCG object such as a tree or a rock) that is allowed to be deformed in the three-dimensional virtual space is a target. Therefore, the related art described above cannot be applied to a training content of maintenance work of an industrial product in which deformation of parts is not allowed.

The invention has been made in view of the above problems, and an object of the invention is to provide a method for handling colliding 3DCG objects without deformation in creation of a training content for work.

### Solution to Problem

In order to solve such a problem, an aspect of the invention is a training content creation system for creating a training content for training work for a device arranged in a virtual space by displaying an object of the device on a display. The training content creation system includes: a storer configured to store part operation definition information defining operations of a plurality of parts that constitute the device in the virtual space and part arrangement information defining arrangements of the plurality of parts in the virtual space for each of the parts; a content creator configured to create the training content based on the part operation definition information and the part arrangement information; a scenario analyzer configured to analyze a scenario of the training content based on the part operation definition information; and a collision detector configured to detect collision between parts among the plurality of parts. The collision detector identifies a second part that collides with a first part among the plurality of parts based on an analysis result of the scenario by the scenario analyzer. The content creator registers, in the part arrangement information of the first part, the second part identified as colliding with the first part by the collision detector.

### Advantageous Effects of Invention

According to the invention, it is possible to handle colliding 3DCG objects without deformation in creation of a training content for work.

### Brief Description of Drawings

[FIG. 1] FIG. 1 is a diagram illustrating an example of a configuration of a training content creation system according to an embodiment.
[FIG. 2] FIG. 2 is a diagram illustrating an example of a configuration of a part arrangement file according to the embodiment.
[FIG. 3] FIG. 3 is a diagram illustrating an example of a configuration of a part arrangement file according to a comparative example.
[FIG. 4] FIG. 4 is a flowchart illustrating an example of a collision part object registration process according to the embodiment.
[FIG. 5] FIG. 5 is a diagram illustrating an example of an assembly screen according to the embodiment.
[FIG. 6] FIG. 6 is a diagram illustrating an example of a collision confirmation screen according to the embodiment.
[FIG. 7] FIG. 7 is a diagram illustrating an example of a collision part object registration screen according to the embodiment.

### Description of Embodiments

Hereinafter, embodiments according to the disclosure of the present application will be described with reference to the drawings. The embodiments are examples for describing the present application including the drawings. In the embodiments, omission and simplification are appropriately made for clarification of the description. Unless otherwise specified, components of the embodiments may be singular or plural. An embodiment of a combination of one embodiment and another embodiment is also included in the embodiments according to the present application.

In the following embodiments, the same or similar components are denoted by the same reference numerals, and the description thereof may be omitted or only differences may be mainly described in the following embodiments with respect to the previously mentioned embodiments. When there are a plurality of the same or similar components, the same reference numerals may be assigned with different subscripts to make the description. When there is no need to distinguish the plurality of components, the description may be made by omitting the subscripts.

In the following embodiments, a "processor" is one or more processor devices. At least one processor device is typically a micro-processor device such as a central processing unit (CPU), and may also be another type of processor device such as a graphics processing unit (GPU). At least one processor device may be a processor device in a broad sense, such as a hardware circuit (for example, a field-programmable gate array (FPGA) or an application specific integrated circuit (ASIC)) that performs a part or all of processes.

In the following embodiments, various types of information may be described using an expression such as "xxx file", but the information may be data in any format such as a table format. Therefore, the "xxx file" can be referred to as "xxx information". The notation of the information is not limited to a markup format. In the following embodiments, the configuration of the file is an example, and one file may be divided into two or more files, or all or a part of two or more files may be one file.

In the following embodiments, a process may be described with a "yyy program" as a subject, but a function of a "yyy unit" can be implemented by reading the "yyy program" from a storage device to a processor and executing the "yyy program". The function may be implemented when one or more computer programs are executed by a processor, may be implemented by one or more hardware circuits (for example, an FPGA or an ASIC), or may be implemented by a combination thereof.

When a function is implemented by executing a program by a processor, the function may be at least a part of the processor as a specified process is executed using a storage device and/or an interface device as appropriate. The process described with a program as a subject may be a process performed by a processor or a device including the processor. The program may be installed from a program source. The program source may be, for example, a program distribution computer or a computer-readable recording medium (for example, a non-transitory recording medium). Description of functions is an example. A plurality of functions may be integrated into one function, or one function may be divided into a plurality of functions.

In the following embodiments, an authoring tool that creates a training content for training maintenance work used in a 2-dimensional (2D) display of a smartphone or a tablet terminal or a head-mounted display compatible with virtual reality (VR) will be described. By using the training content, each part constituting a maintenance target device in a virtual space is represented by a part object, and a function of operating a target part by removing or attaching an identified part is provided as in a real space.

In the following embodiment, a work target on which training is performed using the training content is a rack-mounted server implemented by storing a plurality of unit servers in a rack. The target work of the training content is disassembly work of the rack-mounted server. Cables are connected to the plurality of unit servers stored in the rack, and connector portions of the cables are covered with connector covers.

During the disassembly work for the rack-mounted server, when the unit server is taken out from the rack, it is necessary to remove the connector of the cable after removing the cover. On the contrary, during assembly work for the rack-mounted server, when the unit server is stored in the rack, it is necessary to attach the cover after connecting the connector of the cable.

That is, during the disassembly work for the rack-mounted server, a unit server main body cannot be taken out unless one of colliding parts of the unit server is removed first. During the assembly work for the rack-mounted server, the rack-mounted server can be operated by causing necessary parts to collide with other parts of the unit server after the unit server main body is stored in the rack, wherein, "collision of parts" refers to, for example, two parts overlapping each other three-dimensionally.

As described above, in the disassembly work and the assembly work for the rack-mounted server, it is necessary to attach and remove another part colliding with a certain part of the unit server according to a work order. The training content for training a worker of the maintenance work is a content according to a scenario that defines movement of each part according to a work content and the work order of the work for the work target.

In the training content, in a three-dimensional virtual space, a unit server constituting the rack-mounted server and each part constituting the unit server are represented by a 3-dimensional computer graphics (3DCG) object (part object), and a disassembly and assembly process is represented by a 3DCG animation. The worker wears a head-mounted display and trains the maintenance work for the rack-mounted server in the three-dimensional virtual space similarly to the real world while viewing the training content displayed on the display.

### (Configuration of Training Content Creation System 1 according to Embodiment)

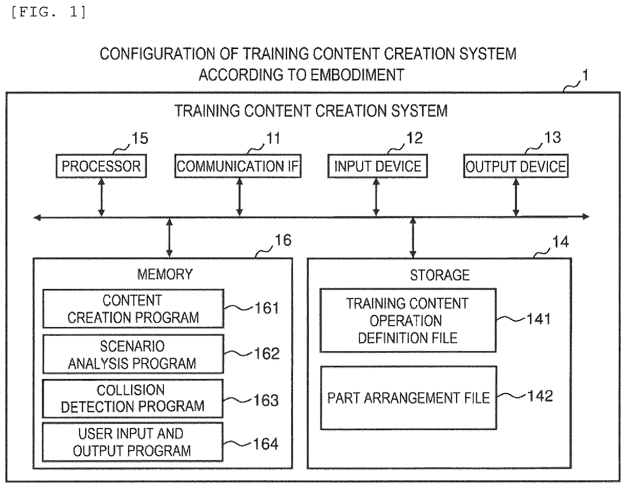

FIG. 1 is a diagram illustrating an example of a configuration of a training content creation system 1 according to an embodiment. The training content creation system 1 includes a communication IF 11, an input device 12, an output device 13, a storage 14, a processor 15, and a memory 16.

The communication IF 11 is a communication device for the training content creation system 1 to communicate with another computer or device. The input device 12 is an information input device such as a keyboard or a mouse. The output device 13 is an information output device such as a display.

The storage 14, which is a secondary storage device, is a storer that stores the training content operation definition file 141 and a part arrangement file 142.

The training content operation definition file 141 stores part operation definition information such as a position, a movement direction, and a movement amount at each time of each part object in a three-dimensional virtual space for each training content. The part operation definition information defines the position and movement of each part object in each scenario of the training content. The part operation definition information may be stored in a database.

The part arrangement file 142 stores, in the three-dimensional virtual space, part arrangement information for each scenario of the training content including an arrangement position of each part object and an ID of another colliding part in a state in which the work target device is assembled. The "assembled state" refers to a "state in which a 3DCG model of each individually created part is arranged at a predetermined position and an overall shape of the device of the work target is known". The part arrangement information may be stored in a database.

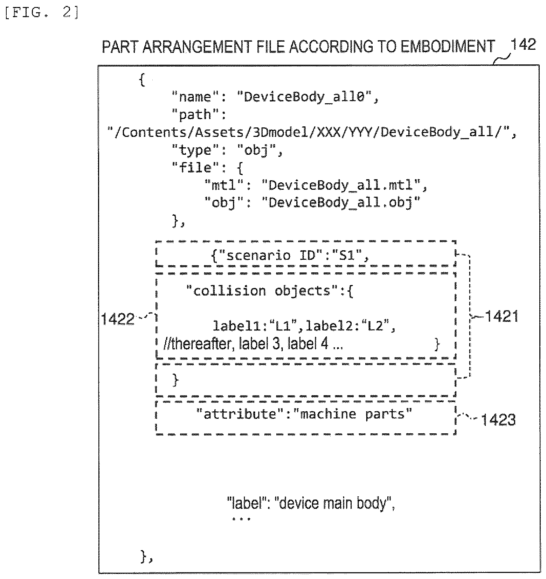

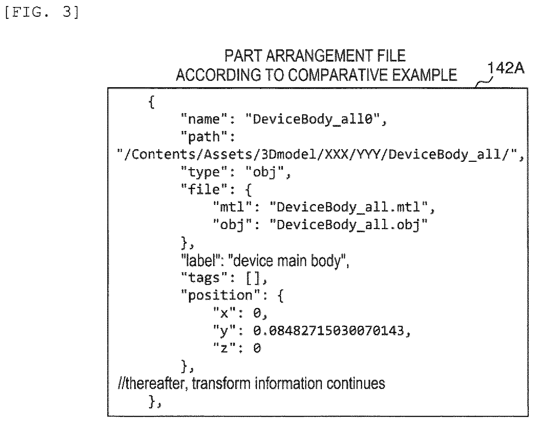

FIG. 2 is a diagram illustrating an example of a configuration of the part arrangement file 142 according to the embodiment. FIG. 3 is a diagram illustrating an example of a configuration of a part arrangement file 142A according to a comparative example. As illustrated in FIG. 2, the part arrangement file 142 includes items of "name", "path", "type", "file", "scenario ID", "collision objects", "attribute", "label", or the like for each part object.

The "name" is a name of the corresponding part object. The "path" is a storage path of the corresponding part object. The "type" is a type of the corresponding part object. The "file" is mtl of the corresponding part object and a file name of the object. The "scenario ID" 1421 is an ID of the scenario of the training content.

The "collision objects" 1422 is a collision part object that collides with the corresponding part object. The "attribute" 1423 is a part attribute of the corresponding part object. The "label" is a label ID of the corresponding object. Items after "label" of the part arrangement file 142 are the same as items after "label" of the part arrangement file 142A.

In comparison with the part arrangement file 142A, the "scenario ID" 1421, the "collision objects" 1422, and the "attribute" 1423 are added to the part arrangement file 142.

The part arrangement file 142A records, for each part object, information related to an arrangement of a part object. On the other hand, the part arrangement file 142 records, for each part object, information related to an arrangement of a part object and a part colliding with the corresponding part object for each scenario. By repeating the "scenario ID" 1421, "a part colliding with the corresponding part object for each scenario" is described. In the "collision object" 1422, all other parts that collide with the corresponding part object are listed.

Returning to the description of FIG. 1. The processor 15 executes a program acquired from the storage 14 or the outside in cooperation with the memory 16 which is a primary storage device. The program executed by the processor 15 includes a content creation program 161, a scenario analysis program 162, a collision detection program 163, and a user input and output program 164 stored in the memory 16.

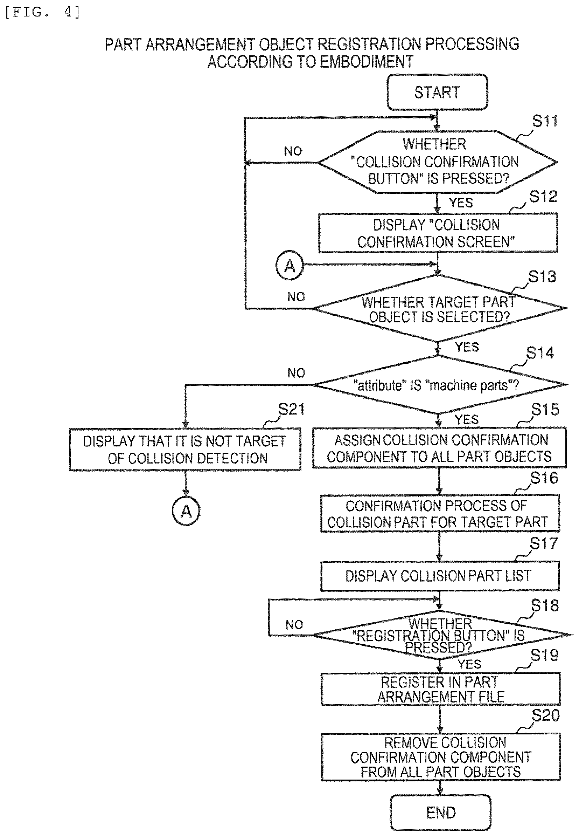

The content creation program 161 is an execution program of the authoring tool, and creates a training content based on data or the like stored in the training content operation definition file 141 and the part arrangement file 142. Details of a process of the content creation program 161 will be described later with reference to FIG. 4.

The scenario analysis program 162 analyzes the scenario of the training content based on the part operation definition information stored in the training content operation definition file 141. The scenario analysis program 162 analyzes the part operation definition information to obtain an analysis result of the scenario of each training content including coordinates, the movement direction, the movement amount, or the like of each part object in the three-dimensional virtual space.

· The collision detection program 163 detects collision between part objects in the three-dimensional virtual space. A known technique can be used for the collision detection. For example, the collision detection program 163 assigns a component for confirming collision to each part object in the three-dimensional virtual space, and detects that there is collision when there is a point shared by components of two part objects.

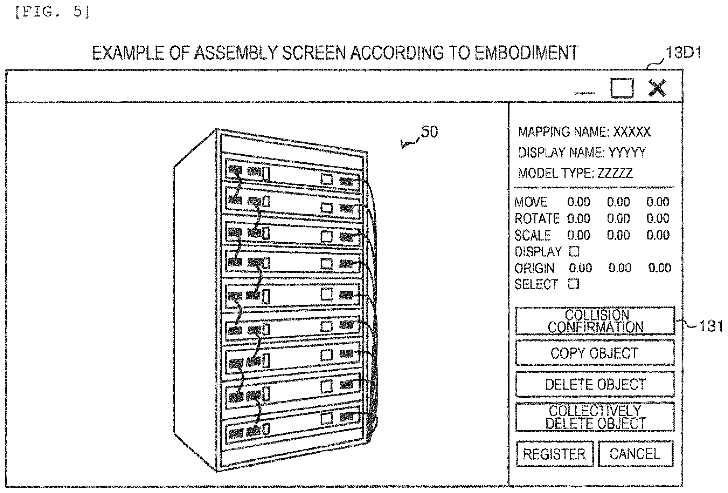

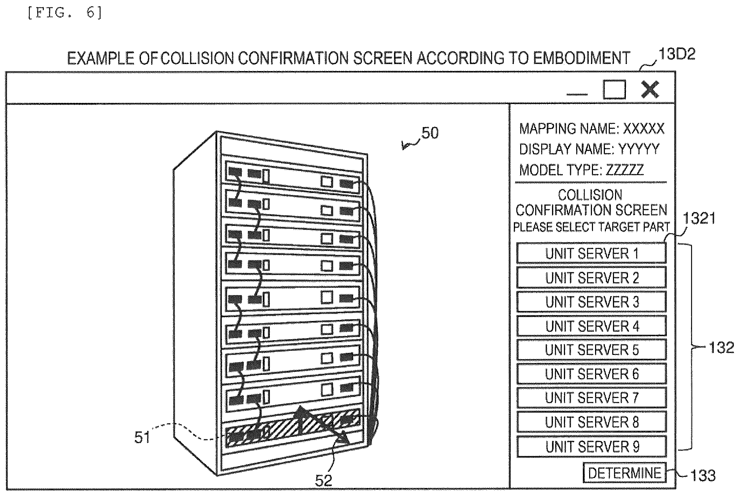

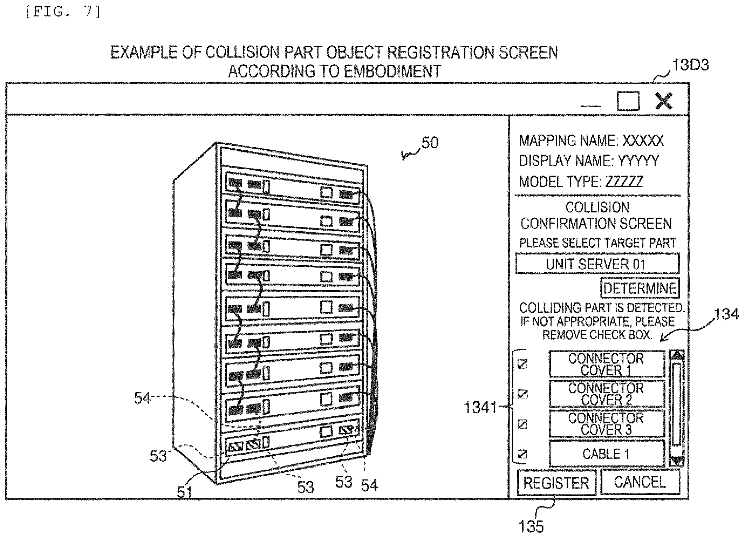

The user input and output program 164 displays a graphical user interface (GUI) to a creator (user) who creates a training content using the training content creation system 1. The GUI includes an assembly screen 13D1 (FIG. 5), a collision confirmation screen 13D2 (FIG. 6), and a collision part object registration screen 13D3 (FIG. 7). The user input and output program 164 receives various inputs by the creator of the training content via the input device 12. The user input and output program 164 receives designation or designation exclusion of a collision part object input by the creator of the training content via the collision part object registration screen 13D3.

### (Collision Part Object Registration Process according to Embodiment)

FIG. 4 is a flowchart illustrating an example of a collision part object registration process according to the embodiment. The collision part object registration process is started in response to an instruction from the creator of the training content, or is automatically started in a process of creating the training content. When the collision part object registration process is started, the content creation program 161 first displays the assembly screen 13D1 (FIG. 5) on a display screen of the output device 13 via the user input and output program 164.

First, in step S11, the content creation program 161 determines, via the user input and output program 164, whether a collision confirmation button 131 (FIG. 5) of the assembly screen 13D1 is pressed by the creator of the training content. The content creation program 161 shifts the process to step S12 when the collision confirmation button 131 is pressed (step S11, YES), and repeats the process to step S11 when the collision confirmation button 131 is not pressed (step S11, NO).

In step S12, the content creation program 161 displays the collision confirmation screen 13D2 (FIG. 6) on the display screen of the output device 13 via the user input and output program 164.

Next, in step S13, the content creation program 161 determines, via the user input and output program 164, whether a part object to be subjected to collision detection in the collision confirmation screen 13D2 is selected and a determination button 133 is pressed. When the part object to be subjected to collision detection in the collision confirmation screen 13D2 is selected and the determination button 133 is pressed (step S13, YES), the content creation program 161 shifts the process to step S14. On the other hand, when the part object is not selected and the determination button 133 is not pressed (step S13, NO), the content creation program 161 returns the process to step S11 and displays the assembly screen 13D1 on the display screen of the output device 13.

In step S14, the content creation program 161 refers to the part arrangement file 142 (FIG. 2) and determines whether the "attribute" of the part object selected in step S13 is "machine parts". The "machine parts" indicates that a part type is not a general-purpose part but a machine part unique to the work target. The content creation program 161 shifts the process to step S15 when the "attribute" is "machine parts" (step S14, YES), and shifts the process to step S21 when the "attribute" is not "machine parts" (step S14, NO).

In step S15, the content creation program 161 assigns, via the collision detection program 163, a collision confirmation component to all the part objects whose operations are defined in the training content operation definition file 141. Next, in step S16, the content creation program 161 executes a confirmation process of a part that collides with the target part to which the collision confirmation component is assigned in step S15 via the collision detection program 163.

Next, in step S17, the content creation program 161 displays, via the user input and output program 164, a collision part list 138 (FIG. 7), which is a list of collision parts extracted in step S16, on the collision part object registration screen 13D3 (FIG. 7).

Next, in step S18, the content creation program 161 determines, via the user input and output program 164, whether a registration button 135 (FIG. 7) is pressed by the creator of the training content. Before the registration button 135 is pressed, the creator of the training content may perform an operation of giving a check to a part to be selected from the collision part list 138 (FIG. 7) and un-checking a part to be excluded. When the registration button 135 is pressed (step S18, YES), the content creation program 161 shifts the process to step S19, and when the registration button 135 is not pressed (step S18, NO), the content creation program 161 repeats step S18.

In step S19, the content creation program 161 registers the "label" of the collision part for the target part in the "collision objects" 1422 corresponding to the corresponding "scenario ID" 1421 in the part arrangement file 142 based on a check status of a check box of the collision part list 138 (FIG. 7).

Next, in step S20, the content creation program 161 removes, via the collision detection program 163, the collision confirmation components assigned to all the part objects in step S15.

On the other hand, in step S21, the content creation program 161 displays, on the collision confirmation screen 13D2 (FIG. 6), that the target part selected in step S13 is not the target of the collision detection in step S16. When step S21 is completed, the content creation program 161 returns the process to step S13.

### (ASSEMBLY SCREEN 13D1)

FIG. 5 is a diagram illustrating an example of the assembly screen 13D1 according to the embodiment. The assembly screen 13D1 is one of display screens of the authoring tool, and is controlled by the content creation program 161 and the user input and output program 164 (FIG. 1).

The assembly screen 13D1 is a screen on which an individually created 3DCG model (part object) is arranged at a predetermined position and the overall shape of a rack-mounted server 50 is displayed in a determinable manner. The assembly screen 13D1 is displayed on the display screen of the output device 13 when a part arrangement object registration process (FIG. 4) is started, and indicates an assembly state of the rack-mounted server 50. The assembly screen 13D1 includes the collision confirmation button 131.

### (Collision Confirmation Screen 13D2)

FIG. 6 is a diagram illustrating an example of the collision confirmation screen 13D2 according to the embodiment. The collision confirmation screen 13D2 is one of display screens of the authoring tool, and is controlled by the content creation program 161 and the user input and output program 164 (FIG. 1). When the collision confirmation button 131 of the assembly screen 13D1 (FIG. 5) is pressed, the collision confirmation screen 13D2 is transitioned from the assembly screen 13D1 and is displayed on the display screen of the output device 13. The collision confirmation screen 13D2 includes a list display 132 of nine unit servers constituting the rack-mounted server 50 and the determination button 133.

For example, it is assumed that a "unit server 1" button 1321 is pressed from the list display 132. Then, in the display of the rack-mounted server 50, a corresponding unit server 51 is identifiably displayed by changing a color or the like, and an arrow 52 indicating removing work of the unit server 51 is displayed. Instead of pressing the "unit server 1" button 1321, the display of the unit server 51 may be directly pressed. When the determination button 133 is pressed in this state, the screen transitions to the collision part object registration screen 13D3 (FIG. 7).

### (Collision Part Object Registration Screen 13D3)

FIG. 7 is a diagram illustrating an example of the collision part object registration screen 13D3 according to the embodiment. The collision part object registration screen 13D3 is one of display screens of the authoring tool, and is controlled by the content creation program 161 and the user input and output program 164 (FIG. 1).

The collision part object registration screen 13D3 includes a collision part list 134 and the registration button 135. For example, in FIG. 7, the collision part list 134 displays all the part objects identified by the collision detection program 163 (FIG. 1) when colliding with the unit server 51 corresponding to the "unit server 1" button 1321 selected on the collision confirmation screen 13D2. All the part objects ("connector cover 1", "connector cover 2", "connector cover 3", "cable 1", ...) may be displayed in a list with a scroll bar.

The collision part list 134 includes a check box 1341 for each part object. In an initial state, all the check boxes 1341 are checked. The creator of the training content can un-check the check box 1341 of the part object detected not to collide with the unit server 51 corresponding to the "unit server 1" button 1321.

The collision part object registration screen 13D3 identifiably displays a connector cover 53 and a cable 54 that collide with the corresponding unit server 51 in the display of the rack-mounted server 50. By displaying the connector cover 53 in a translucent manner, it is easy to determine a part hidden by the connector cover 53. When the registration button 135 is pressed in this state, identification information of the part object whose check box 1341 is checked is registered in the "collision objects" 1421 (FIG. 2) of the part arrangement file 142 of the unit server 51.

The collision part object registered in the "collision objects" 1421 of the part arrangement file 142 needs to be removed before the target part object corresponding to the part arrangement file 142. When the worker attempts to remove the target part object before the collision part object during execution of the training content, a warning sound is output or the collision part object is identifiably displayed by light emission or the like.

### (Modification of Embodiment)

In the above-described embodiment, in the training content, the collision part that collides with the target part selected by the creator of the training content is identified, and a part name thereof is registered in the part arrangement file 142. However, the invention is not limited to this, and regardless of selection/non-selection by the creator of the training content, a process of identifying a collision part for all parts constituting a target device in the training content and registering a part name of the collision part in the part arrangement file 142 may be automatically performed.

In the above-described embodiment, the collision detection program 163 performs a collision confirmation process by assigning the collision confirmation components to all the part objects. However, the invention is not limited to this, and information, in which a certain part that collides with the target part is identified as the collision part, may be recorded as collision information, and a collision part that collides with another target part represented by the same object as the target part may be identified based on the collision information. For example, by recording a positional relationship between the target part and the collision part that collides with the target part as the collision information, based on the collision information, a collision part that collides with another target part represented by the same object as the target part can be easily identified based on the positional relationship.

In the above-described embodiment, the training content is a disassembly content for training disassembly work of removing parts from the device to disassembly a device. However, the embodiment is not limited thereto, and is also applicable to an assembly content for training assembly work of assembling a device by assembling parts. In the case of the assembly content, collision between parts constituting the device is detected by starting from an object of the entire device indicating a state after the assembly of the device and reversely reproducing the content.

### (Effects of Embodiments)

In the above-described embodiment, when the target part is selected, the collision part that collides with the target part is identified, and the identified collision part name is registered in the part arrangement file 142 of the target part. Therefore, in the training content of the work for the target part in which deformation of the part is not allowed, the collision part can be handled without being deformed. The creator of the training content does not need to take time and effort to implement the function of checking collision with a part each time when creating the training content. The creator of the training content has an effect of easily implementing, in the training content, a function of moving the target part when collision of peripheral parts is eliminated even without expert knowledge of programming.

In the above-described embodiment, since the GUI is provided such that the creator of the training content can correct the excess or deficiency of the collision part, extraction accuracy of the collision part can be improved.

In the above-described embodiment, when the target part selected by the creator of the training content is a unique part, the collision part is identified, and when the target part is a common part, the collision part is not identified, so that only important collision can be extracted.

In the above-described embodiment, by registering the identified collision part name in the part arrangement file 142 of the target part for each scenario of the training content, it is possible to handle a situation in which the collision part is different when the scenario is different.

In the above-described embodiment, it is possible to prevent omission of extraction of the collision part by detecting collision between parts for all parts whose operations are defined in the training content operation definition file 141.

The invention is not limited to the embodiment described above, and includes various modifications and equivalent configurations within the scope of the appended claims. For example, the embodiment described above has been described in detail to facilitate understanding of the invention, and the invention is not limited to those including all the configurations described above. A part of a configuration of one embodiment may be replaced with a configuration of another embodiment. A configuration of another embodiment may be added to a configuration of one embodiment. Another configuration may be added to a part of a configuration of each embodiment, and a part of the configuration of each embodiment may be deleted or replaced with another configuration.

A part or all of the configurations, functions, processing units, processing methods, or the like described above may be implemented by hardware by, for example, designing with an integrated circuit. Alternatively, the configurations, functions, processing units, processing methods, or the like described above may be implemented by software by a processor interpreting and executing a program for implementing each function.

Information such as a program, a table, and a file for implementing each function can be stored in a storage device such as a memory, a hard disk, and a solid state drive (SSD), or a non-transitory recording medium such as an integrated circuit (IC) card, an SD card, and a digital versatile disc (DVD).

Control lines and information lines considered to be necessary for descriptions are illustrated, and not all control lines and information lines necessary for implementation are illustrated. Actually, it may be considered that almost all the configurations are connected to one another.

### Reference Signs List

1: training content creation system
14: storage
141: training content operation definition file
142: part arrangement file
15: processor
16: memory
161: content creation program
162: scenario analysis program
163: collision detection program
164: user input and output program

## Claims

1. A training content creation system for creating a training content for training work for a device arranged in a virtual space by displaying an object of the device on a display, the training content creation system comprising:
a storer configured to store part operation definition information defining operations of a plurality of parts that constitute the device in the virtual space and part arrangement information defining arrangements of the plurality of parts in the virtual space for each of the parts;
a content creator configured to create the training content based on the part operation definition information and the part arrangement information;
a scenario analyzer configured to analyze a scenario of the training content based on the part operation definition information; and
a collision detector configured to detect collision between parts among the plurality of parts, wherein
the collision detector identifies a second part that collides with a first part among the plurality of parts based on an analysis result of the scenario by the scenario analyzer, and
the content creator registers, in the part arrangement information of the first part, the second part identified as colliding with the first part by the collision detector.

2. The training content creation system according to claim 1, wherein
the content creator
displays the plurality of parts constituting the device on a graphical user interface (GUI),
receives, via the GUI, the first part selected by a user from the plurality of parts displayed on the GUI,
displays, on the GUI, the second part identified by the collision detector as a part colliding with the first part selected by the user,
receives, via the GUI, the second part designated to be registered in the part arrangement information by the user among the second parts displayed on the GUI, and
registers, in the part arrangement information of the first part, the second part designated to be registered in the part arrangement information.

3. The training content creation system according to claim 2, wherein
the content creator determines whether the first part selected by the user is a part unique to the device or a common part used in common with another device, and
the collision detector identifies the second part that collides with the first part when the first part is the part unique to the device.

4. The training content creation system according to claim 2, wherein
the content creator
displays the plurality of parts constituting the device on a graphical user interface (GUI) for each scenario analyzed by the scenario analyzer,
receives, via the GUI, the first part selected by the user from the plurality of parts displayed on the GUI,
displays, on the GUI, the second part identified by the collision detector as a part colliding with the first part selected by the user,
receives, via the GUI, the second part designated to be registered in the part arrangement information by the user among the second parts displayed on the GUI, and
registers, in the part arrangement information of the first part, the second part designated to be registered in the part arrangement information for each scenario.

5. The training content creation system according to claim 1, wherein
the collision detector detects the collision between the parts for all the parts whose operations are defined by the part operation definition information.

6. The training content creation system according to claim 1, wherein
the collision detector
records collision information identifying the second part as colliding with the first part, and
identifies, based on the collision information, a fourth part colliding with a third part represented by a same object as the first part.

7. The training content creation system according to claim 1, wherein
the training content is a disassembly content for training disassembly work of disassembling the device by removing the part from the device, and
the collision detector detects the collision between the parts based on an object indicating a state of the device before disassembly.

8. The training content creation system according to claim 1, wherein
the training content is an assembly content for training assembly work of assembling the device by assembling the parts, and
the collision detector detects the collision between the parts based on an object indicating a state after assembly of the device.

9. A training content creation method executed by a training content creation system for creating a training content for training work for a device arranged in a virtual space by displaying an object of the device on a display, wherein
the training content creation system includes
a storer configured to store part operation definition information defining operations of a plurality of parts that constitute the device in the virtual space and part arrangement information defining arrangements of the plurality of parts in the virtual space for each of the parts,
a content creator configured to create the training content based on the part operation definition information and the part arrangement information,
a scenario analyzer configured to analyze a scenario of the training content based on the part operation definition information, and
a collision detector configured to detect collision between parts among the plurality of parts, and
the training content creation method includes processes of:
identifying, by the collision detector, a second part that collides with a first part among the plurality of parts based on an analysis result of the scenario by the scenario analyzer; and
registering, by the content creator, in the part arrangement information of the first part, the second part identified as colliding with the first part by the collision detector.
